# EUROPÄISCHE PATENTANMELDUNG

(11) **EP 0 687 518 A1**
(43) Veröffentlichungstag der Anmeldung: **20.12.1995**
(21) Anmeldenummer: 95108685.9
(22) Anmeldetag: 06.06.1995
(51) Int. Cl.: B23H 7/26, B23H 9/00

(54) **Verfahren und Vorrichtung zum Senkerodieren**

(30) Priorität: 17.06.1994 DE 4421246
(71) Anmelder: SIEMENS AKTIENGESELLSCHAFT, D-80333 München (DE)
(72) Erfinder: Kohlert, Erich, D-91058 Erlangen (DE); Dotzler, Gerhard, D-90431 Nürnberg (DE); Gebald, Georg, Ing. grad., D-91356 Kirchehrenbach (DE)

(57) **Zusammenfassung**

Bei einem Verfahren und einer Vorrichtung zum Senkerodieren gemäß der Erfindung wird eine in Richtung der Erodierbewegung (20) verschiebbare Senkelektrode (12, 14) durch eine im wesentlichen senkrecht dazu erfolgende Bewegung eines mit der Senkelektrode (12, 14) in Wirkverbindung stehenden Antriebsmittels (6) verschoben. Für das Erodieren zueinander paralleler Oberflächen (16, 18) von einander gegenüberliegenden Bauteilen sind insbesondere zwei in einem Grundkörper (8) gelagerte einander gegenüberliegende Senkelektroden (12 und 14) vorgesehen, die ein gleichzeitiges Erodieren dieser Oberflächen (16 bzw. 18) ermöglichen.

## Beschreibung

Die Erfindung bezieht sich auf ein Verfahren und eine Vorrichtung zum Senkerodieren von geometrischen Formen in elektrisch leitende Bauteile.

Beim Senkerodieren ist eine senkrecht zur Oberfläche eines elektrisch leitenden Bauteils erfolgende Vorschubbewegung der Senkelektrode erforderlich. Unter räumlich senkrecht zur Oberfläche des Bauteils in Richtung der Erodierbewegung beengten Verhältnissen, beispielsweise einander gegenüberliegende Oberflächen zweier benachbarter Bauteile, beispielsweise ein Schacht oder die Innenoberfläche eines Rohres, ist deshalb ein Senkerodieren nur mit Schwierigkeiten durchführbar.

Der Erfindung liegt nun die Aufgabe zugrunde, ein Verfahren zum Senkerodieren anzugeben, das auch unter räumlich in Richtung der Erodierbewegung beengten Verhältnissen eingesetzt werden kann. Der Erfindung liegt außerdem die Aufgabe zugrunde, eine Vorrichtung zur Durchführung des Verfahrens anzugeben. Insbesondere soll eine Vorrichtung angegeben werden, mit der zugleich an zwei einander gegenüberliegenden Oberflächen eines Werkstücks erodiert werden kann.

Die erstgenannte Aufgabe wird gelöst durch ein Verfahren mit den Merkmalen des Patentanspruchs 1. Bei einem Verfahren gemäß der Erfindung wird eine Senkelektrode in Richtung der Erodierbewegung durch eine senkrecht dazu erfolgende Bewegung einens mit der Senkelektrode in Wirkverbindung stehenden Antriebsmittels verschoben.

Die zweitgenannte Aufgabe wird gelöst mit den Merkmalen des Patentanspruches 2. Eine Vorrichtung gemäß der Erfindung enthält mindestens eine in Richtung der Erodierbewegung mit einem Antriebsmittel verschiebbare Senkelektrode, die derart in Wirkverbindung mit diesem Antriebsmittel steht, daß die Verschiebung der Senkelektrode durch eine im wesentlichen senkrecht dazu erfolgende Bewegung des Antriebsmittels herbeiführbar ist.

Durch die Maßnahmen gemäß der Patentansprüche 1 oder 2 ist gewährleistet, daß ein Senkerodieren auch in räumlich beengten Verhältnissen, beispielsweise zwischen zwei einander gegenüberliegenden Platten, möglich ist, da die senkrecht zur Oberfläche erfolgende Erodierbewegung von außerhalb durch eine senkrecht dazu erfolgende Bewegung übertragen werden kannn.

In einer bevorzugten Ausgestaltung ist als Antriebsmittel eine axial verschiebbare Erodierstange vorgesehen, die an ihrem in Wirkverbindung mit der Senkelektrode stehenden Teil, insbesondere an ihrem freien Ende konisch geformt ist.

Die Senkelektrode ist vorzugsweise mittels wenigstens eines Führungsstiftes in einem hohlen Grundkörper gelagert, der das mit einer konischen Mantelfäche versehene Ende der Erodierstange aufnimmt, wobei der Führungsstift auf dieser konischen Mantelfläche gelagert ist.

Insbesondere sind Mittel, beispielsweise eine Feder, zum Anpressen des Führungsstiftes an diese Mantelfläche vorgesehen. Dadurch ist gewährleistet, daß beim Zurückfahren der Erodierstange ein Rückstellen der Senkelektrode erfolgt.

In einer besonders bevorzugten Ausführungsform ist ein Grundkörper vorgesehen, der zwei einander gegenüberliegende in einander entgegengesetzte Richtungen verschiebbare Senkelektroden aufnimmt. Dadurch können in zwei parallel gegenüberliegende Oberflächen, beispielsweise die Wände eines sich senkrecht zum Rohrboden eines nuklearen Dampferzeugers erstreckenden Schachtes, zugleich geometrische Formen oder Durchbrüche senkerodiert werden. Dies ist insbesondere bei Arbeiten in Anlagen der Nukleartechnik von Vorteil, da durch die damit verbundene Rüstzeitersparnis die Dosisbelastung des Reparaturpersonals reduziert wird.

Anstelle einer Ausführungsform mit zwei gegenüberliegenden Senkelektroden sind auch Ausführungsformen möglich, bei denen mehrere Senkelektroden vorgesehen sind, die auf einem Grundkörper entsprechend der Symmetrie des zu bearbeitenden Körpers symmetrisch derart an einem Grundkörper angeordnet sind, daß die gegenseitigen Winkel der jeweiligen Bewegungsrichtung der Erodierbewegung einen der Anzahl der Senkelektroden entsprechenden Teil von 360° bilden. Ebenso sind auch unsymmetrische Anordnungen möglich.

Zur weiteren Erläuterung der Erfindung wird auf das Ausführungsbeispiel der Zeichnung verwiesen, in deren
**Figur 1** eine Vorrichtung zum Senkerodieren gemäß der Erfindung in einem Schnitt veranschaulicht wird.
**Figuren 2 und 3** veranschaulichen das Wirkprinzip einer weiteren vorteilhaften Ausgestaltung der Erfindung in einer Seitenansicht bzw. einer Draufsicht.

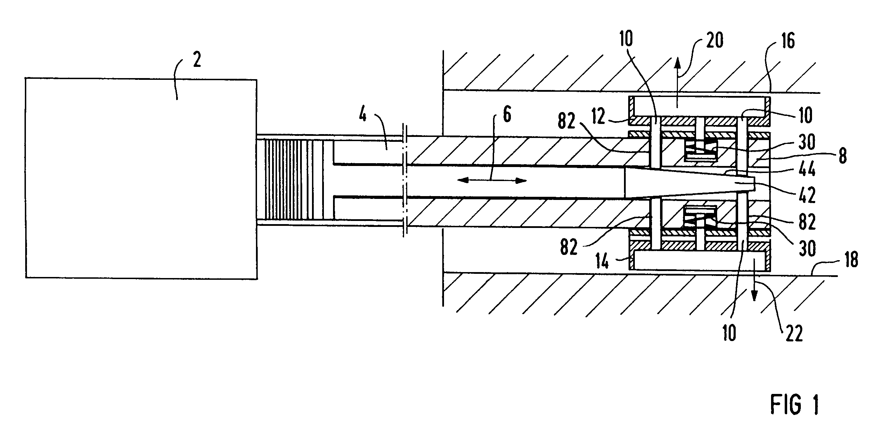

Gemäß Figur 1 ist an einem Erodierkopf 2 eine Erodierstange 4 gelagert, die axial in Richtung des Doppelpfeiles 6 verschiebbar ist. Die Erodierstange 4 ist im Innern eines starr mit dem Erodierkopf 2 verbundenen hohlen Grundkörpers 8 axial verschiebbar gelagert. Die Erodierstange 4 ist mit einem freien Ende 42 versehen, dessen Mantelfläche 44 konisch ist. Der beispielsweise hohlzylindrische Grundkörper 8 ist mit radialen Bohrungen 82 versehen, die Führungsstifte 10 zweier einander gegenüberliegender Senkelektroden 12 und 14 aufnehmen. Die Bohrungen 82 im Grundkörper dienen zur Führung der Senkelektroden 12 und 14 bei der senkrecht zur Axialbewegung der Erodierstange 4 in Richtung der Pfeile 20 bzw. 22 erfolgenden Erodierbewegung.

Im Beispiel der Figur ist der die Senkelektrode 12 und 14 tragende Grundkörper 8 in das Innere eines schachtartigen Hohlraumes, beispielsweise ein Leitmantelkasten eines nuklearen Dampferzeugers, eingeführt, der durch einander zugewandte, parallele Oberflächen 16 und 18 zweier gegenüberliegender Bauteile gebildet wird. Die Zustellbewegung der Senkelektroden 12 und 14 kann ungehindert durch eine von einem außerhalb dieses Hohlraumes befindlichen Erodierkopf 2 aus bewirkte Axialbewegung der Erodierstange 4 eingeleitet werden.

Die Führungsstifte 10, auf der die Senkelektroden 12 und 14 befestigt sind, werden durch radial wirkende Druckfedern 30 gegen die konische Mantelfläche 44 des Endes 42 der Erodierstange 4 gepreßt. Beim Zurückziehen der Erodierstange 4 ist deshalb gewährleistet, daß die Senkelektroden 12 und 14 automatisch zurückgestellt und von den Oberflächen 16 und 18 abgehoben werden. Statt mit einer Druckfeder 30 können die Führungsstifte 10 beispielsweise auch pneumatisch oder hydraulisch oder mit einer mechanisch betätigbaren Hilfsvorrichtung gegen die konische Mantelflache 44 gedrückt werden.

Anstelle einer am freien Ende 42 konisch gestalteten Erodierstange 4 kann auch eine im Bereich der Führungsstifte 10 mit Nocken versehene Welle vorgesehen sein, über die durch eine Drehbewegung die nach außen gerichtete Erodierbewegung 20 bzw. 22 der Senkelektroden 12 bzw. 14 bewirkt werden kann.

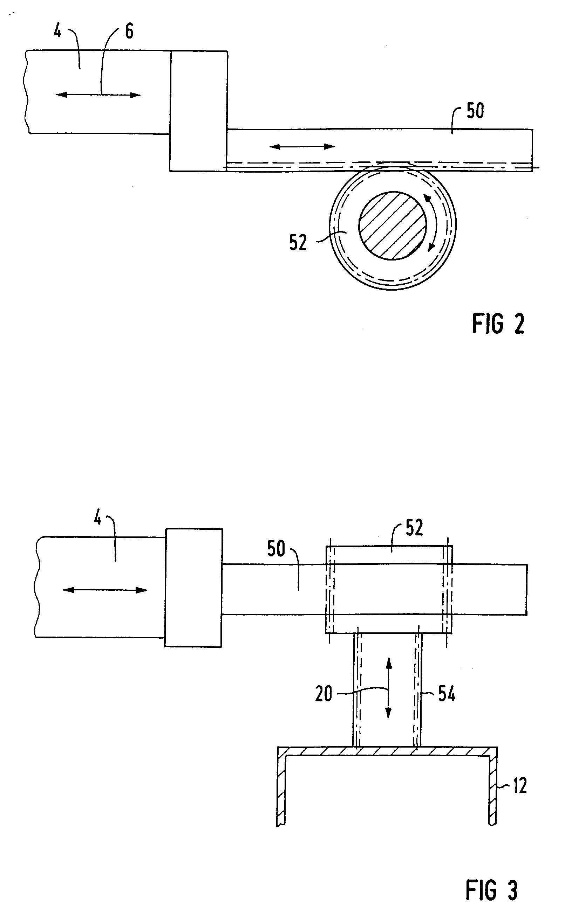

Im Ausführungsbeispiel gemäß **Figuren 2 und 3** ist die Erodierstange 4 kraftschlüssig mit einer Zahnstange 50 gekoppelt, die in ein hohles Zahnrad 52 eingreift. Das Zahnrad 52 bildet die Spindelmutter für eine Steilgewindespindel 54, die die Senkelektrode 12 trägt. Die Ausstell- und Rückholbewegung 20 der Senkelektrode 12 wird durch eine Vorwärts- bzw. Rückwärtsbewegung der Erodierstange 4 bewirkt. Durch diese Maßnahme ist eine zusätzliche mechanische, hydraulische oder pneumatische Einrichtung zur Rückholung der Senkelektrode 12 nicht mehr erforderlich.

## Patentansprüche

1. Verfahren zum Senkerodieren bei dem eine Senkelektrode (12, 14) in Richtung der Erodierbewegung (20) durch eine senkrecht dazu erfolgende Bewegung eines mit der Senkelektrode (12, 14) in Wirkverbindung stehenden Antriebsmittels (4) verschoben wird.

2. Vorrichtung zum Senkerodieren mit mindestens einer in Richtung der Erodierbewegung (20) verschiebbaren Senkelektrode (12, 14), die zur Verschiebung derart in Wirkverbindung mit einem Antriebsmittel (4) steht, daß die Verschiebung der Senkelektrode (12, 14), durch eine im wesentlichen senkrecht dazu erfolgende Bewegung des Antriebsmittels (4) herbeiführbar ist.

3. Vorrichtung nach Anspruch 2,
**dadurch gekennzeichnet, daß** als Antriebsmittel (4) eine axialverschiebbare Erodierstange vorgesehen ist, die an ihrem in Wirkverbindung mit der Senkelektrode (12) stehenden Teil (42) konisch geformt ist.

4. Vorrichtung nach Anspruch 2 oder 4,
**dadurch gekennzeichnet, daß** die Senkelektrode (12) mittels eines Führungsstiftes (10) in einem hohlen Grundkörper (8) gelagert ist, der das mit einer konischen Mantelfläche (44) versehene Ende (42) der Erodierstange (6) aufnimmt, wobei der Führungsstift (10) auf dieser konischen Mantelfläche (44) gelagert ist.

5. Vorrichtung nach Anspruch 4,
**dadurch gekennzeichnet, daß** Mittel zum Anpressen des Führungsstiftes (10) an diese Mantelfläche (44) vorgesehen sind.

6. Vorrichtung nach Anspruch 5,
**dadurch gekennzeichnet, daß** als Mittel eine Feder (30) vorgesehen ist.

7. Vorrichtung nach Anspruch 2,
**dadurch gekennzeichnet, daß** als Antriebsmittel (4) eine Erodierstange vorgesehen ist, die an ihrem in Wirkverbindung mit der Senkelektrode (12) stehenden Teil mit einer Zahnstange (50) versehen ist, die in ein als Spindelmutter gestaltetes Zahnrad (52) eingreift, in dem eine kraftschlüssig mit der Senkelektrode (12) verbundene Gewindespindel (54) gelagert ist.

8. Vorrichtung nach einem der Ansprüche 2 bis 7,
**dadurch gekennzeichnet, daß** ein Grundkörper (8) vorgesehen ist, der zwei einander gegenüberliegende und in einander entgegengesetzte Richtungen (20, 22) verschiebbare Senkelektroden (12, 14) aufnimmt.
